# EUROPEAN PATENT APPLICATION

(11) **EP 4 124 645 A1**
(43) Date of publication of application: **01.02.2023**
(21) Application number: 21020390.7
(22) Date of filing: 29.07.2021
(51) Int. Cl.: C10G 7/00, B01D 3/34, C10G 55/04

(54) **SEPARATION OF A MIXTURE OF HYDROCARBONS**

(71) Applicant: Linde GmbH, 82049 Pullach (DE)
(72) Inventor: Fritz, Helmut, 82049 Pullach (DE); Bauer, Ludwig, 82049 Pullach (DE); Chalakova, Mariyana, 82049 Pullach (DE); McCracken, Sean, 82049 Pullach (DE); Mayer, Sebastian, 82049 Pullach (DE)

(57) **Abstract**

A process (100) for separating a feed mixture comprising heavy hydrocarbons with 5 to 12 carbon atoms to produce a first fraction of higher boiling hydrocarbons and a second fraction of lower boiling hydrocarbons is proposed, wherein the feed mixture is subjected to a distillation in a distillation column (10) operated in a distillation pressure range, an aqueous support stream being used to support said distillation. According to the invention, said aqueous support stream is a liquid stream of process water which is added to the feed mixture before being passed into the distillation column (10), and wherein the distillation pressure range is a superatmospheric pressure range. A corresponding plant is also part of the invention.

## Description

The present invention relates to a process and a plant for separating a feed mixture comprising heavy hydrocarbons into a higher boiling fraction and a lower boiling fraction according to the preambles of the independent claims.

### Background

Steam cracking of different paraffins to obtain olefins and other hydrocarbon products is well known and, for example, described in Zimmermann, H. & Walzl, R., "Ethylene," Ullmann's Encyclopedia of Industrial Chemistry, Wiley-VCH, online publication 15 April 2007, doi: 10.1002/14356007.a10_045.pub2.

In steam cracking, besides classical main target product ethylene, several other compounds or groups of compounds are formed. These include so-called pyrolysis gasoline. As explained in Zimmermann & Walzl (see above, section 5.3.2.1), pyrolysis gasoline is separated from a cracked gas after quenching in a water-quench column which is part of the so-called front-end section of a separation sequence, but also at later stages of the separation sequence. While most of the pyrolysis gasoline obtained in the water-quench column is typically recycled to the primary fractionation, an excess amount of pyrolysis gasoline can be fractionated further into higher quality gasoline and heavier oil streams or fractions.

The present invention is particularly concerned with separating pyrolysis gasoline obtained from a steam cracker operated with "light," i.e. gaseous, feedstocks, particularly ethane and/or propane and/or butane, but can likewise be used with gas mixtures of similar composition and features obtained from sources and processes other than steam cracking.

The present invention targets at improving the separation of such mixtures of hydrocarbons, wherein such mixtures include saturated and unsaturated compounds, particularly aromatics.

### Disclosure of the invention

Against this background, the present invention proposes a process and a plant for separating a feed mixture comprising heavy hydrocarbons, wherein "heavy" indicates a carbon number of 5 to 12, into a higher boiling fraction and a lower boiling fraction, comprising the features of the independent claims. Preferred embodiments are the subject of the independent claims and of the description that follows.

The separation of a mixture of such heavy hydrocarbons, especially fractions from steam crackers operated with light feedstocks as mentioned before, particularly with ethane and/or propane and/or butane, into a higher boiling ("heavier") fraction and a lower boiling ("lighter") fraction, particularly into a (pyrolysis) gasoil and a (pyrolysis) gasoline fraction (these terms being used synonymously herein), requires elevated temperatures for distillation. Heating the mixed, unhydrated, unsaturated components, such as olefins, dienes, styrene etc., in the bottom (sump) of a separation column used for this purpose, however, results in excessive polymerisation and, thus, fouling of the column and the heat exchangers.

The current strategy to mitigate excessive polymerisation fouling of such distillation systems is the reduction of the required process temperatures by reduction of the hydrocarbon pressure in the distillation system using a combination of an applied vacuum and an injection of stripping steam to the bottom of the distillation column.

This, however, leads to some issues, including that, when unsaturated hydrocarbons are present, the ingress of oxygen under vacuum conditions enhances polymerisation and fouling and that, in the case of operating above atmospheric pressure, the amount of stripping steam that must be added causes a mismatch in the relation of the volumetric vapour flow to the volumetric hydrocarbon liquid flow.

As a result, a maldistribution and a poor contact between the liquid and gas phases may occur, leading to poor separation of the gasoil and gasoline fractions and difficulties in meeting specifications such as the endpoint on the light fraction and the flash point on the heavy fraction.

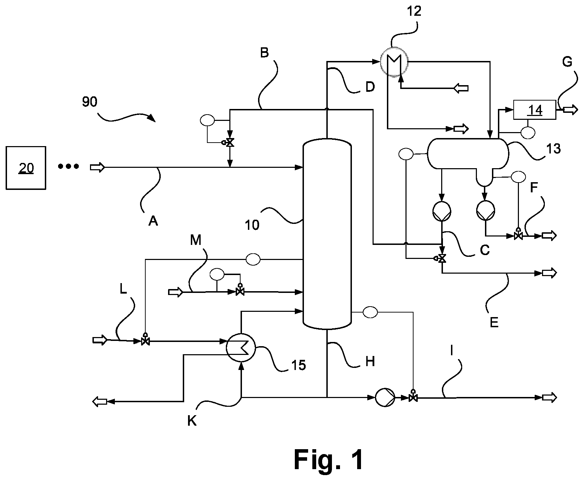

The typical process flow for a system operating in vacuum with steam stripping is shown in Figure 1 and further explained in connection with this Figure below.

The present invention solves the problems indicated above by introducing process water, instead of process steam, to the distillation system. This allows a distillation above atmospheric pressures at temperatures low enough to be able to control the fouling behaviour of the feed compounds. The vapour and the liquid load to the column are coupled in a balanced manner, which optimises the hydraulic profile of the distillation column. The inventive concept is particularly suitable when applied to separation of heavy hydrocarbons obtained when operating a steam cracker with a light or gaseous feedstock, as mentioned above.

Overall, and expressed in other terms, the present invention proposes a process for separating a feed mixture comprising heavy hydrocarbons with 5 to 12 carbon atoms to produce a first (higher boiling, "heavier") fraction and a second (lower boiling, "lighter") fraction, wherein the feed mixture is subjected to a distillation in a distillation column operated in a distillation pressure range, an aqueous support stream being used to support said distillation.

The feed mixture treated according to the present invention may comprise at least 50, 60, 70, 80, 90 or 95% by volume or on a molar basis of the heavy hydrocarbons or may consist (essentially) thereof. The first fraction formed according to the present invention may particularly contain at least the major part, i.e. at least 50%, 60%, 70%, 80%, 90% or 95% by volume or on a molar basis, of a first group of hydrocarbons previously contained in the feed mixture or a part thereof subjected to said separation and the second fraction formed according to the present invention may particularly contain at least the major part, i.e. at least 50%, 60%, 70%, 80%, 90% or 95% by volume or on a molar basis, of a second group of hydrocarbons previously contained in the feed mixture or the part thereof subjected to said separation, wherein said first group of hydrocarbons has boiling points in a first temperature range and said second group of hydrocarbons has boiling points in a second temperature range below and not overlapping with said first temperature range. Particularly, said first group of hydrocarbons may include hydrocarbons with 9 to 12 carbon atoms and said second group of hydrocarbonsmay include hydrocarbons with 5 to 8 carbon atoms.

As mentioned, in conventional processes, the aqueous support stream is a stream of stripping steam and the distillation pressure range is a subatmospheric pressure range, i.e. the distillation is performed in a "vacuum." In contrast, according to the present invention, said aqueous support stream is a liquid stream of process water, which is added to the feed mixture before being passed into the distillation column, and the distillation pressure range is a superatmospheric pressure range.

As also mentioned, the process may include steam cracking of a feedstock comprising or essentially consisting of ethane and/or propane and/or butane to provide the feed mixture or a precursor mixture thereof, "comprising or essentially consisting of" referring to a at least 50%, 60%, 70%, 80%, 90% or 95% by volume or on a molar basis. The term "precursor mixture," in this connection, relates to a mixture such as a raw gas stream from which the feed mixture which is distilled according to the present invention is formed, e.g. by the known steps of a quench and a front-end separation.

The invention provides significant enhancements to the conventional configuration of the system as discussed above.

Particularly, in the inventive process, a reflux stream to the distillation column is formed from a combined stream including at least a part of the liquid stream of process water, the feed mixture, and a part of a hydrocarbon stream formed by condensing and phase-separating a top gas stream of the distillation column.

According to the present invention, in other words, the required amount of process steam is added as process water to the column feed and reflux. A combined stream of water, feed and reflux thus formed is, in a preferred embodiment, homogenously distributed to the top dual flow tray of the distillation column by use of a liquid distributor. As feed and reflux streams are biphasic streams, they need to be degassed inside the distillation column. Degassing and mixing is preferably done in a feed box. The mixed liquid stream is guided to a pre-distributor trough followed by a final distributor, which ensures homogeneous distribution to the top dual flow tray.

That is, said forming the reflux stream preferably comprises degassing the combined stream inside the distillation column.

The total liquid volumetric flow rate is increased, in the context of the present invention, by the amount of water required to produce the process steam in the column reboiler. The biphasic liquid phase mixture travelling down the distillation column ensures adequate wetting the trays for the given volumetric flow of the gas rising through column. The resultant steam stripping and liquid/vapour contact facilitate the separation of the heavier gasoil and lighter gasoline.

In an alternative embodiment, and dependent on the feed composition and product requirements, trays can be added above the feed stage. In this case, the process water and the reflux are combined and enter at the top of the distillation column.

This alternative embodiment, in other words, includes that a a reflux stream to the distillation column is formed from a combined stream including at least a part of the liquid stream of process water, and a part of a hydrocarbon stream formed by condensing and phase-separating a top gas stream of the distillation column, wherein the reflux stream is at least in part introduced separately from the feed mixture into the distillation column at a feed position which is geodetically above a feed position of the feed mixture.

In all embodiments, there is no significant vaporisation of the process water travelling down the distillation column. Gasoil and process water drain directly to the reboiler leaving the column sump dry. This helps to prevent a separation of aqueous and hydrocarbon phase in sump and prevents formation of fouling products.

The operating temperature of the reboiler is preferably controlled at a higher temperature than the column bottom tray. The operating temperature of the reboiler is preferably adjusted to a point where water can only exist in the gas phase. This results in the generation of the necessary stripping steam from the process water coming from the column sump. The duty required to vaporise the steam is supplied by the reboiler. The reboiler operating temperature also ensures some of the lighter components of the gasoil are vaporised to meet the gasoil specification.

That is, in the process according to the present invention, an aqueous fraction formed in a sump of the distillation column is withdrawn therefrom and is evaporated at an evaporation temperature in a reboiler. Advantageously, the evaporation temperature is adjusted to be above a temperature at a bottom tray of the distillation column and is adjusted to cause a complete evaporation of the aqueous phase. It will be understood that, the aqueous fraction may also contain dissolved hydrocarbons.

In the inventive process a hydrocarbon fraction formed in the sump of the distillation column may be withdrawn therefrom and may be used as, or used in forming, a heavy hydrocarbon product stream. This represents the first fraction of higher boiling hydrocarbons, or the heavier fraction mentioned above.

The overhead condenser and reflux drum are preferably operated without the need for a vacuum system. The condenser condenses both the strip steam and the gasoline. Due to the density difference, the phases separate easily and the two phases can be removed from the overhead accumulator separately.

Again in other words, forming said hydrocarbon stream by condensing and phase-separating the top gas stream of the distillation column may include cooling said top gas stream and phase-separating the top-gas stream forming an aqueous stream and the hydrocarbon stream, wherein a further part of the hydrocarbon stream is used as, or used in forming, a pyrolysis gasoline product stream. This represents the second fraction of lower boiling hydrocarbons, or the lighter fraction mentioned above.

A plant adapted to perform a process for separating a feed mixture comprising heavy hydrocarbons with 5 to 12 carbon atoms to produce a first fraction of higher boiling hydrocarbons and a second fraction of lower boiling hydrocarbons, wherein the plant comprises a distillation column, means adapted to subject the feed mixture to a distillation in the distillation column, means adapted to operate the distillation column in a distillation pressure range, and means adapted to provide an aqueous support stream being used to support said distillation, is also provided according to the present invention.

According to the present invention, said means adapted to provide said aqueous support stream are adapted to provide said aqueous support stream as a liquid stream of process water and are also adapted to add said support stream to the feed mixture before being passed into the distillation column. Furthermore, said means adapted to operate the distillation column in said distillation pressure range are adapted to provide said distillation pressure range as a superatmospheric pressure range.

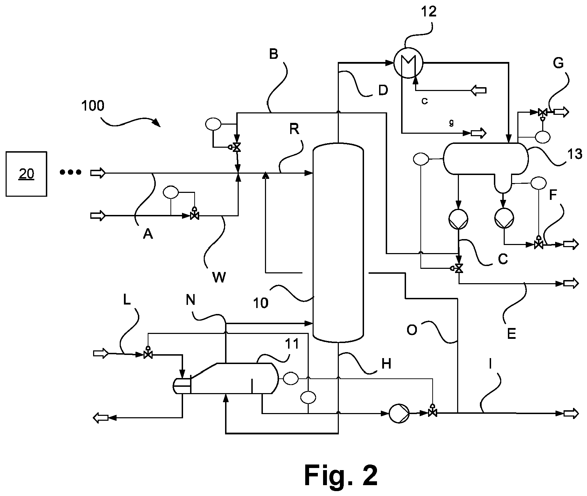

As mentioned, the present invention particularly solves the two problems by introducing process water, instead of process steam to the system. Features and advantages of the present invention are summarized in Table 1 below, where the left column refers to a conventional process, such as shown in Figure 1, and the right column refers to a process according an embodiment of the invention, such as shown in Figure 2 (OHD, overhead; BTM, bottom; FBP, final boiling point).

**Table 1**

| | | Embodiments of invention; process water added to reflux | Conventional system; vacuum plus stripping steam |
|---|---|---|---|
| Feed | t/h | 3.3 | 3.3 |
| Overhead product (max. final boiling point 200 °C) | t/h | 1.5 | 1.6 |
| Bottom product (min. flash 65 °C) | t/h | 1.8 | 1.7 |
| Vent gas | t/h | 0.0 | 0.0 |
| | | | |
| Reflux drum pressure | Bar a | 1.6 | 1.05 |
| Reboiler outlet temperature | °C | 127 | 201 |
| Strip gas steam | kg/h | 0 | 100 |

The present invention is further explained in connection with the appended drawings illustrating an embodiment of the present invention vis-à-vis the prior art.

Short description of the Figures
Figure 1 schematically illustrates a method not forming part of the invention.
Figure 2 schematically illustrates a method according to an embodiment the invention.

### Embodiments of the invention

Hereinbelow, explanations relating to specific method steps likewise apply to hardware components, plant units and the like used for performing such method steps, and vice versa. Repeated explanations of method steps or hardware components with an identical or comparable function and/or of identical or similar technical realisation are not repeated for reasons of conciseness.

In Figure 1, a method 90 not forming part of the invention is illustrated in the form of a simplified process diagram.

In the method 90, a distillation column 10 is supplied with a feed mixture A. Feed mixture A may particularly be taken from a phase separator associated wih a wather-wash column used for treating a cracked gas of a steam cracking unit 20.

Stream A is, before being introduced at a top of the distillation column 10, mixed with a reflux stream B under flow control. The reflux stream B is a part of a hydrocarbon mixture C formed by condensing and phase-separating a top stream D of the distillation column 10 of which another part is used as, or in forming a, pyrolysis gas product stream E. Condensation and phase separation is performed in a condensing system including a cooler 12, a phase separator 13, pumps not specifically indicated, and a vaccum system 14 controlling a pressure in the condensing system. Cooler 12 may be operated with a cooling water stream not specifically indicated. Besides the hydrocarbon mixture C, an aqueous stream F, and a stream G of non-condensible components is formed. The condensing system, and the method 90 as a whole, includes suitable control structures which are indicated in a simplified form and operate as generally known to the skilled person.

In the method 90, a stream H withdrawn from the sump of the distillation column 10 is in a first proportion I withdrawn from the method 90 as a pyrolysis gasoline stream. In a second proportion K, it is evaporated in a thermosyphone reboiler 15 and reintroduced into the distillation column 10. The thermosyphone reboiler 15 is operated with a stream L of low pressure steam. Low pressure stream M is also introduced into the distillation column 10 as stripping steam.

In Figure 2, a method 100 according to an embodiment of the present invention is illustrated in the form of a simplified process diagram. In Figure 2, components, method steps, and streams already explained in connection with Figure 1 are indicated with like reference numerals.

An essential difference of the method 100 as compared with method 90 is that no vacuum system 14 is present in the condensing system and that the stream G of non-condensible components is formed by withdrawing a gas phase from the phase separator 30 without using a vacuum.

An aqueous support stream W is provided as a liquid stream of process water and is added to the feed mixture A before being passed into the distillation column 10. More precisely, a reflux stream R to the distillation column 10 is formed, in method 100, from a combined stream including at least a part of the liquid stream W of process water, the feed mixture A, and a part B of a hydrocarbon stream C formed by or including condensing and phase-separating a top gas stream D of the distillation column 10 in the condensing system. For an alternative configuration, which is not specifically illustrated, reference is made to the explanations above.

An a aqueous fraction formed in a sump of the distillation column 10 is withdrawn therefrom, initially in the form of stream H, and is evaporated at an evaporation temperature in a reboiler 11. A steam stream N with some hydrocarbon components formed accordingly is reintroduced into the distillation column. Optionally, a partial stream O of stream I may be used for minimum flow control.

## Claims

1. A process (100) for separating a feed mixture comprising heavy hydrocarbons with 5 to 12 carbon atoms to produce a first fraction of higher boiling hydrocarbons and a second fraction of lower boiling hydrocarbons, wherein the feed mixture is subjected to a distillation in a distillation column (10) operated in a distillation pressure range, an aqueous support stream being used to support said distillation, **characterized in that** said aqueous support stream is a liquid stream of process water which is added to the feed mixture before being passed into the distillation column (10), and wherein the distillation pressure range is a superatmospheric pressure range.

2. The process (100) according to claim 1, further including steam cracking of a feedstock comprising or essentially consisting of ethane and/or propane and/or butane to provide the feed mixture or a precursor mixture thereof.

3. The process (100) according to claim 1 or 2, wherein a reflux stream to the distillation column (10) is formed from a combined stream including at least a part of the liquid stream of process water, the feed mixture, and a part of a hydrocarbon stream formed by or including condensing and phase-separating a top gas stream of the distillation column (10).

4. The process (100) according to claim 4, wherein said forming the reflux stream comprises degassing the combined stream inside the distillation column (10).

5. The process (100) according to claim 1 or 2, wherein a reflux stream to the distillation column (10) is formed from a combined stream including at least a part of the liquid stream of process water, and a part of a hydrocarbon stream formed by or including condensing and phase-separating a top gas stream of the distillation column (10), and wherein the reflux stream is at least in part introduced separately from the feed mixture into the distillation column (10) at a feed position above a feed position of the feed mixture.

6. The process (100) according to any one of the preceding claims, wherein an aqueous fraction formed in a sump of the distillation column (10) is withdrawn therefrom and is evaporated at an evaporation temperature in a reboiler (11).

7. The process (100) according to claim 6, wherein the evaporation temperature is adjusted to be above a temperature at a bottom tray of the distillation column (10) and is adjusted to cause a complete evaporation of the aqueous phase.

8. The process (100) according to claim 6 or 7, wherein a hydrocarbon fraction formed in the sump of the distillation column (10) is withdrawn therefrom and is used as, or used in forming, a heavy hydrocarbon product stream.

9. The process (100) according to claim 3 or 5, wherein forming said hydrocarbon stream by condensing and phase-separating the top gas stream of the distillation column (10) includes cooling said top gas stream and phase-separating the top-gas stream forming an aqueous stream and the hydrocarbon stream, and wherein a further part of the hydrocarbon stream is used as, or used in forming, a pyrolysis gasoline product stream.

10. The process (100) according to any one of the preceding claims, wherein the feed mixture comprises at least 50, 60, 70, 80, 90 or 95% by volume or on a molar basis of the heavy hydrocarbons, wherein the first fraction contains at least 50%, 60%, 70%, 80%, 90% or 95% by volume or on a molar basis, of a first group of hydrocarbons previously contained in the feed mixture or a part thereof subjected to said separation, wherein the second fraction contains at least 50%, 60%, 70%, 80%, 90% or 95% by volume or on a molar basis, of a second group of hydrocarbons previously contained in the feed mixture or the part thereof subjected to said separation.

11. The process (100) according to claim 10, wherein said first group of hydrocarbons has boiling points in a first temperature range and said second group of hydrocarbons has boiling points in a second temperature range below and not overlapping with said first temperature range.

12. The process (100) according to claim 10 or 11, wherein said first group of hydrocarbons includes hydrocarbons with 9 to 12 carbon atoms and said second group of hydrocarbons includes hydrocarbons with 5 to 8 carbon atoms.

13. A plant adapted to perform a process (100) for separating a feed mixture comprising heavy hydrocarbons with 5 to 12 carbon atoms to produce a first fraction of higher boiling hydrocarbons and a second fraction of lower boiling hydrocarbons, wherein the plant comprises a distillation column (10), means adapted to subject the feed mixture to a distillation in the distillation column (10), means adapted to operate the distillation column (10) in a distillation pressure range, and means adapted to provide an aqueous support stream being used to support said distillation, **characterized in that** said means adapted to provide said aqueous support stream are adapted to provide said aqueous support stream as a liquid stream of process water and to add said support stream to the feed mixture before being passed into the distillation column (10), and wherein said means adapted to operate the distillation column (10) in said distillation pressure range are adapted to provide said distillation pressure range as a superatmospheric pressure range.

14. The plant according to claim 13 adapted to perform a process according to any one of claims 1 to 12.
